# EUROPÄISCHE PATENTANMELDUNG

(11) **EP 2 355 287 A1**
(43) Veröffentlichungstag der Anmeldung: **10.08.2011**
(21) Anmeldenummer: 10000839.0
(22) Anmeldetag: 28.01.2010
(51) Int. Cl.: H02H 1/00, H02H 7/08

(54) **Überstromschutzeinrichtung für Elektromotoren**

(71) Anmelder: Siebe Appliance Controls GmbH, 78559 Gosheim (DE)
(72) Erfinder: Bernhard, Heinz, 78549 Spaichingen (DE); Mayer, Harald, 78628 Rottweil-Göllsdorf (DE); Weinmann, Bernhard, 78559 Gosheim (DE)
(74) Vertreter: Kocher, Mark Werner

(57) **Zusammenfassung**

Es wird eine Überstromschutzeinrichtung für Elektromotoren mit einem in einer Motorversorgungsleitung (14) geschalteten, als Leiterbahnabschnitt ausgebildeten Strommesswiderstand vorgeschlagen, dessen Spannungsabfall einer Messeinrichtung zur Erfassung des Motorversorgungsstroms zugeführt wird. Eine Komparatoreinrichtung (17, 18) dient zum Vergleich des gemessenen Motorversorgungsstroms mit einem Stromgrenzwert, bei dessen Überschreiten ein in die Motorversorgungsleitung (14) geschalteter Schalter (12) geöffnet wird. Der Stromgrenzwert entspricht wenigstens dem dreifachen des maximalen Motorversorgungsstroms bei ordnungsgemäßem Motorbetrieb.

## Beschreibung

Die Erfindung betrifft eine Überstromschutzeinrichtung für Elektromotoren mit den Merkmalen des Oberbegriffs des Anspruchs 1.

Bei einer derartigen, aus der DE 40 33 444 A1 bekannten Überstromschutzeinrichtung weist eine Strommesseinrichtung einen als Schmelzsicherung ausgebildeten Strommesswiderstand auf. Hierbei sind zwei separate Sicherungseinrichtungen parallel geschaltet, nämlich die Schmelzsicherung für den normalen Netzbetrieb und eine elektronische Schutzeinrichtung, die dann einsetzt, wenn vom Netzbetrieb auf Notstrombetrieb mit Kurzschlussstrombegrenzung umgeschaltet worden ist. Eine derartige Schmelzsicherung als Messwiderstand bringt einen hohen Aufwand bei der Herstellung und bei der Bestückung mit sich. Die Einstellung und Optimierung von zwei separaten Sicherungseinrichtungen erscheint ebenfalls sehr aufwändig und ist allenfalls für mittels Notstromversorgungen gespeiste Gleich-und/oder Wechselspannungsnetze erforderlich. Für einfache und kostengünstige Anwendungen sind derartige Überstrom-Schutzeinrichtungen nicht geeignet.

Aus der WO 2006/087342 A1 ist es zwar prinzipiell bekannt, Leiterbahnabschnitte als Messwiderstand zur Erfassung von elektrischen Strömen zu verwenden, jedoch handelt es sich dort um die sehr präzise Erfassung elektrischer Ströme mit Temperaturkompensation, die für einfache und kostengünstige Überstrom-Schutzeinrichtungen nicht in Frage kommt.

Eine Aufgabe der vorliegenden Erfindung besteht darin, eine einfache und kostengünstigere Überstrom-Schutzeinrichtung für Anwendungen zu schaffen, bei denen es auf die Genauigkeit der Stromerfassung nicht ankommt, insbesondere Überstrom-Schutzeinrichtungen für Elektromotoren in Kompressoren, Lüftern und dergleichen.

Diese Aufgabe wird erfindungsgemäß durch eine Überstrom-Schutzeinrichtung mit den Merkmalen des Anspruchs 1 gelöst.

Durch die reduzierte Anzahl der Bauteile, insbesondere die Verwendung eines Leiterbahnabschnitts als Strommesswiderstand, wird neben Kostenvorteilen die Zuverlässigkeit der Baugruppen und der Messung erhöht. Durch den Verzicht eines separaten Bauteils als Strommesswiderstand und die Verwendung eines Leiterbahnabschnitts entstehen bei einem Kurzschluss keine Funken, so dass der Aufwand von zusätzlichen Sicherungselementen ebenfalls reduziert werden kann. Da bei Überlast eines Motors z.B. durch Blockieren des Rotors bei einem Kompressor ein relativ hoher Strom fließt, kann ein sehr hoher Stromgrenzwert gewählt werden, ohne dass es dabei auf eine Messgenauigkeit ankommt, insbesondere nicht bei der Strommessung. Dabei wird nicht nur die Zerstörung des Elektromotors bei typischen Fehlern, wie die Blockierung des Rotors, sicher verhindert, sondern auch die Zerstörung des Schalters selbst, ohne dass der Schalter den Fehlerstrom längere Zeit führen müsste. Der Schutz des Schalters und des Elektromotors wird dadurch mit minimalen Mitteln erreicht.

Durch die in den Unteransprüchen aufgeführten Maßnahmen sind vorteilhafte Weiterbildungen und Verbesserungen der im Anspruch 1 angegebenen Überstromschutzeinrichtung möglich.

Zweckmäßigerweise weist die Komparatoreinrichtung einen Komparator und eine nachgeschaltete Steuersignalstufe zum Steuern des Schalters auf, wobei die Steuersignalstufe prinzipiell auch im Komparator integriert sein kann, so dass der Komparatorausgang direkt den Schalter steuert.

Der Schalter ist bevorzugt als Relais oder Halbleiterschalter ausgebildet, wobei der Halbleiterschalter zweckmäßigerweise als Triac, Thyristor oder MOSFET ausgebildet ist.

Die Messeinrichtung und die Komparatoreinrichtung sind in vorteilhafter Weise auf der mit dem Leiterbahnabschnitt versehenen Leiterplatte angeordnet, so dass eine kleine und kompakte Baueinheit gebildet wird. Bevorzugt ist dabei die Messeinrichtung und die Komparatoreinrichtung als Mikrocontroller ausgebildet oder sie sind in einem solchen integriert.

Zur Umwandlung des analogen Strommesssignals in ein digitales Signal weist der Mikrocontroller zweckmäßigerweise einen AD-Wandler auf.

Fließt durch den Strommesswiderstand ein Wechselstrom, so ist der Messeinrichtung in vorteilhafter Weise eine Spitzen- oder Effektivwertstufe und/oder ein Rauschfilter vorgeschaltet oder in dieser integriert. Der Rauschfilter ist dabei bevorzugt als RC-Filter ausgebildet, wobei sich ein RC-Glied als besonders vorteilhaft erwiesen hat. Hierdurch wird eine besonders einfache und kostengünstige Schaltungsanordnung erreicht, sofern die entsprechenden Funktionen nicht ohnehin im Mikrocontroller integriert sind.

In vorteilhafter Weise ist der Spitzen- oder Effektivwertstufe eine Offsetstufe zur Verwertung beider Wechselspannungs-Halbwellen vorgeschaltet, die im Falle eines RC-Filters insbesondere als zusätzlicher Widerstand realisiert sein kann.

Ausführungsbeispiele der Erfindung sind in der Zeichnung dargestellt und in der nachfolgenden Beschreibung näher erläutert. Es zeigen:
- Fig. 1: ein Prinzip-Schaltbild eines ersten Ausführungsbeispiels der Erfindung mit einzelnen Elektronikbaugruppen und
- Fig. 2: das Schaltbild eines zweiten Ausführungsbeispiels der Erfindung mit einem Mikrocontroller.

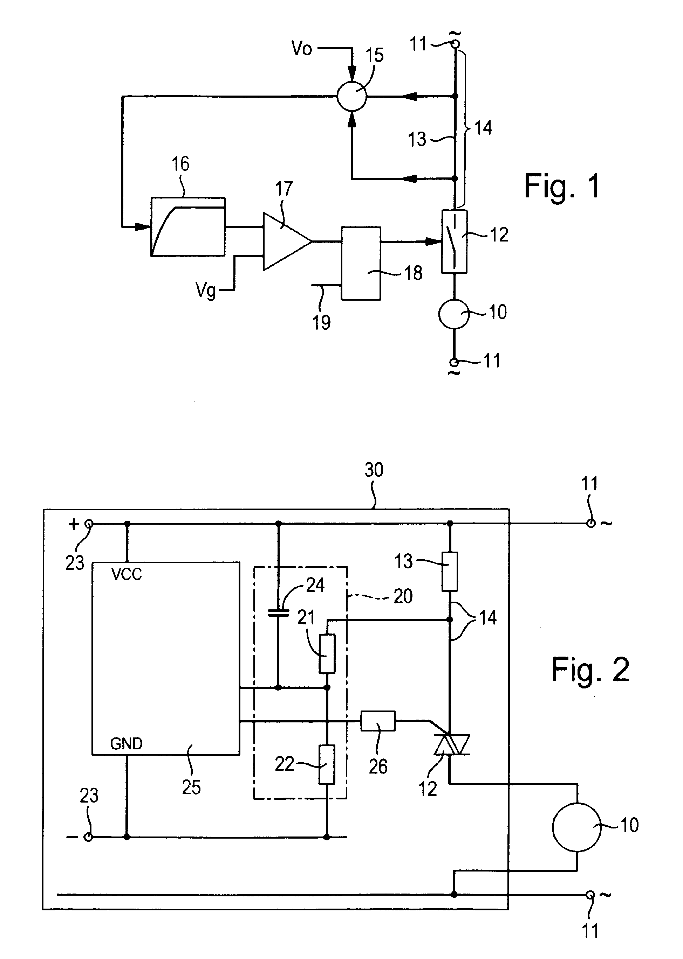

Bei dem in Fig. 1 dargestellten ersten Ausführungsbeispiel wird ein Elektromotor 10 von einer Wechselspannungsquelle 11 gespeist, wobei der Elektromotor 10 beispielsweise Bestandteil eines Lüfters oder eines Kompressors, beispielsweise des Kompressors eines Kühlgeräts sein kann. In Reihe zum Elektromotor 10 ist ein elektrischer Schalter 12 und ein Leiterbahnabschnitt 13 einer Leiterbahn 14 auf einer nicht dargestellten Leiterplatte geschaltet. Der steuerbare elektrische Schalter 12 ist beispielsweise ein Relaisschalter oder ein Halbleiterschalter, wobei letzterer beispielsweise als Triac, Thyristor oder MOSFET ausgebildet sein kann.

Der Spannungsabgriff am Leiterbahnabschnitt 13 ist an eine offsetstufe 15 angelegt, die mit einer Offset-Spannung Vo beaufschlagt ist, um die Messung einer Spitzen-Spitzen-Spannung bzw. die Bestimmung des Effektivwerts unter Berücksichtigung beider Wechselspannungs-Halbwellen zu ermöglichen. Der dem Motorversorgungsstrom durch den Leiterbahnabschnitt 13 bzw. die Leiterbahn 14 entsprechende Spannungsausgangswert der Offsetstufe 15 wird über ein Rauschfilter 16 zur Ausfilterung von Störsignalen einem Komparator 17 zugeführt, der auch als Spitzen- oder Effektivwertstufe dient und einen entsprechenden Spannungswert mit einer einem Stromgrenzwert entsprechenden Vergleichsspannung Vg vergleicht. Der Stromgrenzwert wird so eingestellt, dass er wenigstens und vorzugsweise dem 1,1 - 1,2-fachen beim ordnungsgemäßen Motorbetrieb auftretenden maximalen Motorversorgungsstrom entspricht. Bei einem diesem Stromgrenzwert überschreitenden Motorversorgungsstrom erzeugt der Komparator 17 ein Ausgangssignal für eine Steuersignalstufe 18 zur Betätigung des elektrischen Schalters 12, also zum Öffnen desselben. Die Steuersignalstufe 18 kann über einen Parametriereingang 19 eingestellt bzw. optimiert werden, wobei im einfachsten Fall dieser Parametriereingang 19 auch entfallen kann.

Die dargestellte und beschriebene Überstromschutzeinrichtung dient dazu, beispielsweise bei Blockierung des Rotors des Elektromotors 10 oder bei einem Kurzschluss den Strom abzuschalten, um den Elektromotor 10 und den elektrischen Schalter 12 vor einer Beschädigung oder Zerstörung zu schützen. Eine solche Blockierung des Rotors kann beispielsweise durch einen mechanischen Defekt im Elektromotor 10 selbst oder im damit betriebenen Lüfter oder Kompressor verursacht sein. Da in solchen Fällen der Strom sehr stark ansteigt, kann ein sehr hoher Stromgrenzwert vorgegeben werden, der beispielsweise dem dreifachen des Normalstroms im ordnungsgemäßen Motorbetrieb entspricht.

Für den Schutz des Schalters 12 ist die Abschaltung bei Überschreiten eines Spitzenwerts im Falle eines Kurzschlusses nicht ausreichend. Der Anlaufstrom liegt bei vielen Motoren beim 10-fachen des Nennstroms Diese Ströme sind kurzzeitig zulässig. Für den Schutz des Schalters bzw. Motors müssen daher die effektiven Leistungen, die effektiven Temperaturen oder die effektiven Ströme an diesen auf ein Zeitfenster bezogen berechnet bzw. eingeschätzt werden. Diese Aufgabe kann durch entsprechende Regelkreiselemente bzw. durch entsprechende Software im Falle eines Mikrocontrollers erfüllt werden. Beispielsweise kann ein erster gleitender Mittelwert über 15 sec im Falle eines Kurzschlusses und ein weiterer niedererer gleitender Mittelwert über 3min gebildet werden. Diese Mittelwerte werden jeweils mit entsprechenden Schaltschwellen verglichen, wobei das Ergebnis die Entscheidungsgrundlage für das Öffnen des Schalters aufgrund von Überlast darstellt. Diese Funktionen sind im Falle des ersten Ausführungsbeispiels im Komparator 17 und im Falle des zweiten Ausführungsbeispiels im Mikrocontroller 25 realisiert. Die entsprechenden zeitlichen Vorgaben können selbstverständlich variieren. Dies trifft auch für die Schaltschwellen bzw. Vergleichsspannungen Vg zu. Die genannten Zeitspannen, nach denen jeweils bei entsprechender Überschreitung der zugeordneten Vergleichsspannung Vg der Schalter 12 geöffnet wird, können auch funktional in der Steuersignalstufe 18 enthalten sein.

In einer einfacheren Ausführungsform kann beispielsweise auch der Rauschfilter 16 entfallen. Handelt es sich bei dem Elektromotor 10 um einen Gleichstrommotor, so kann selbstverständlich eine Spitzen- oder Effektivwertstufe entfallen, wobei eventuell eine Pegelanpassungsstufe erforderlich sein könnte.

Sämtliche beschriebenen Bauteile bis auf den Elektromotor 10 sind bevorzugt auf einer gemeinsamen Leiterplatte angeordnet, die ein kompaktes elektrisches Gerät als Überstromschutzeinrichtung bildet.

Bei dem in Fig. 2 dargestellten zweiten Ausführungsbeispiel sind gleiche oder gleichwirkende Bauteile mit denselben Bezugszeichen versehen und nicht nochmals beschrieben.

Die bereits beschriebenen Bauteile 12 bis 14 sind auf einer Leiterplatte 30 angeordnet, auf der neben der den Leiterbahnabschnitt 13 aufweisenden Leiterbahn 14 in nicht näher dargestellter Weise noch weitere Leiterbahnen zur Verbindung der übrigen Bauteile angeordnet sind. Der Spannungsabgriff des Leiterbahnabschnitts 13 ist an ein RC-Glied 20 angelegt, das als Rauschfilter dient. Es besteht aus zwei einen Spannungsteiler bildenden Widerständen 21, 22, die in Reihe mit dem Leiterbahnabschnitt 13 von einer Versorgungsgleichspannungsquelle 23 beaufschlagt sind. Ein Kondensator 24 ist zwischen dem positiven Pol der Versorgungsgleichspannungsquelle 23 und dem Abgriff zwischen den Widerständen 21, 22 geschaltet, wobei über diesen als Filterkondensator dienenden Kondensator 24 (ohne den Widerstand 22) eine vom Motorversorgungsstrom abhängige pulsierende Wechselspannung einem Eingang eines Mikrocontrollers 25 zugeführt wird, wenn doch den Leiterbahnabschnitt 13 ein Wechselstrom fließt. Der Spitzenstrom einer Halbwelle bzw. der Effektivwert einer Halbwelle kann damit berechnet werden. Der Widerstand 22 ermöglicht hier jedoch die Messung einer Spitzen-Spitzen-Spannung bzw. die Bestimmung des Effektivwerts unter Berücksichtigung beider Halbwellen. Aus der am Widerstand 22 abgegriffen Spannung wird somit im Mikrocontroller 25 der Spitzen- oder Effektivwert aus beiden Halbwellen gebildet, so dass Auflösung und Messgenauigkeit erhöht werden.

Ein Steuerausgang des von der Versorgungsgleichspannungsquelle 23 gespeisten Mikrocontrollers 25 steuert über einen Widerstand 26 den elektrischen Schalter 12, der bei diesem Ausführungsbeispiel als Triac ausgebildet ist.

Die Funktion des zweiten Ausführungsbeispiels entspricht dem des ersten Ausführungsbeispiels. Die Funktionen des Komparators 17 und der Steuersignalstufe 18 übernimmt der Mikrocontroller 25. In diesem können in Abwandlung des Ausführungsbeispiels neben einer Spitzen- oder Effektivwertstufe auch der Rauschfilter integriert sein. Zur Umwandlung der zugeführten analogen Spannung weist der Mikrocontroller 25 einen nicht näher dargestellten AD-Wandler auf, der integriert oder vorgeschaltet sein kann.

Durch entsprechende Programmierung des Mikrocontrollers 25 kann der oder die Stromgrenzwerte und das Schaltverhalten des elektrischen Schalters 12 eingestellt werden, wobei auch hier der eingestellte der oder die Stromgrenzwerte wenigstens und vorzugsweise 1,1 - 1,2-fachen des maximalen Motorversorgungsstroms bei ordnungsgemäßem Motorbetrieb entsprechen, wobei für den Kurzschlussfall ein höherer Stromgrenzwert gewählt werden kann.

Anstelle des dargestellten RC-Glieds 20 können selbstverständlich auch andere bekannte Rauschfilter treten. Weiterhin ist selbstverständlich gemäß dem ersten Ausführungsbeispiel eine Ausgestaltung für Gleichstrommotoren möglich, wobei dann das RC-Glied 20 entfallen kann.

Bei der erfindungsgemäßen Überstromschutzeinrichtung gemäß dem ersten und zweiten Ausführungsbeispiel ist eine exakte Kalibrierung des Leiterbahnabschnitts nicht erforderlich. Weiterhin entfällt im Gegensatz zu einer exakten Strommessung gemäß dem eingangs angegebenen Stand der Technik ein Verstärker und eine Temperaturkompensation.

## Patentansprüche

1. Überstromschutzeinrichtung für Elektromotoren, mit einem in einer Motorversorgungsleitung (14) geschalteten Strommesswiderstand (13), dessen Spannungsabfall einer Messeinrichtung zur Erfassung des Motorversorgungsstroms zugeführt wird, mit einer Komparatoreinrichtung (17, 18; 25) zum Vergleich des gemessenen Motorversorgungsstrom mit wenigstens einem Stromgrenzwert, und mit einem in die Motorversorgungsleitung (14) geschalteten, bei Überschreiten des wenigstens einen Stromgrenzwerts sich öffnenden Schalter (12), **dadurch gekennzeichnet, dass** der Strommesswiderstand (13) als Leiterbahnabschnitt auf einer Leiterplatte (30) ausgebildet ist und dass der wenigstens eine Stromgrenzwert wenigstens den 1,1 - 1,2-fachen des maximalen Motorversorgungsstroms bei ordnungsgemäßem Motorbetrieb entspricht.

2. Überstromschutzeinrichtung nach Anspruch 1, **dadurch gekennzeichnet, dass** die Komparatoreinrichtung (17, 18; 25) einen Komparator (17) und eine Steuersignalstufe (18) zum Steuern des Schalters (12) aufweist.

3. Überstromschutzeinrichtung nach Anspruch 1 oder 2, **dadurch gekennzeichnet, dass** der Schalter (12) als Relais oder Halbleiterschalter ausgebildet ist.

4. Überstromschutzeinrichtung nach Anspruch 3, **dadurch gekennzeichnet, dass** der als Halbleiterschalter ausgebildete Schalter (12) ein Triac, Thyristor oder MOSFET ist.

5. Überstromschutzeinrichtung nach einem der vorhergehenden Ansprüche, **dadurch gekennzeichnet, dass** die Messeinrichtung und die Komparatoreinrichtung (17, 18; 25) auf der mit dem als Leiterbahnabschnitt ausgebildeten Strommesswiderstand (13) versehenen Leiterplatte (30) angeordnet ist.

6. Überstromschutzeinrichtung nach einem der vorhergehenden Ansprüche, **dadurch gekennzeichnet, dass** die Messeinrichtung und die Komparatoreinrichtung (17, 18; 25) als Mikrocontroller (25) ausgebildet oder in einem solchen integriert sind.

7. Überstromschutzeinrichtung nach Anspruch 6, **dadurch gekennzeichnet, dass** der Mikrocontroller (25) einen AD-Wandler zur Umwandlung des analogen Strommesssignals in ein digitales Signal und/oder eine Spitzen- oder Effektivwertstufe aufweist.

8. Überstromschutzeinrichtung nach einem der vorhergehenden Ansprüche, **dadurch gekennzeichnet, dass** für Wechselstromanwendungen eine Spitzen- oder Effektivwertstufe und/oder ein Rauschfilter (16; 20) der Messeinrichtung vorgeschaltet oder in dieser integriert ist.

9. Überstromschutzeinrichtung nach Anspruch 8, **dadurch gekennzeichnet, dass** der Rauschfilter (20) als RC-Filter ausgebildet ist.

10. Überstromschutzeinrichtung nach Anspruch 8 oder 9, **dadurch gekennzeichnet, dass** der Spitzen- oder Effektivwertstufe eine Offsetstufe (15; 22) zur Verwertung beider Wechselspannungs-Halbwellen vorgeschaltet ist.

11. Überstromschutzeinrichtung nach einem der vorhergehenden Ansprüche, **dadurch gekennzeichnet, dass** wenigstens zwei unterschiedliche Stromgrenzwerte als Schaltschwellen vorgesehen sind, wobei die Komparatoreinrichtung (17, 18; 25) Mittel zum Öffnen des Schalters (12) erst nach den Schaltschwellen zugeordneten Zeitspannen aufweisen.
